# EUROPEAN PATENT APPLICATION

(11) **EP 1 416 722 A1**
(43) Date of publication of application: **06.05.2004**
(21) Application number: 03078303.9
(22) Date of filing: 20.10.2003
(51) Int. Cl.: H04N 3/15

(54) **Method to eliminate bus voltage drop effects for pixel source follower amplifiers**

(30) Priority: 30.10.2002 US 283598
(71) Applicant: EASTMAN KODAK COMPANY, Rochester, New York 14650 (US)
(72) Inventor: Johnson, Bruce V., Rochester, New York 14650-2201 (US)
(74) Representative: Haile, Helen Cynthia

(57) **Abstract**

A CMOS image sensor includes an array of pixels; a plurality of buses, and each bus is connected to a portion of the pixels, each pixel includes (a1) a photodiode for capturing incident light and converting the light to charge packets; (a2) a source follower amplifier that receives a signal from the photodiode and functions as voltage buffer to drive the photodiode signal across the bus; the image sensor also includes a readout circuit for receiving and storing the output voltage from the amplifier; a current source electrically connected at an opposite end of the bus from the readout circuit to provide a bias current for the source follower amplifier so that there is no current-resistance voltage drop error due to the bias current and bus resistance at the readout circuit.

## Description

The invention relates generally to the field of image sensors and, more particularly, to such image sensors having a pixel source follower amplifier with a bias current which eliminates bus voltage drop by electrically connecting the current source which provides the bias current at the opposite end of the bus from the readout circuit.

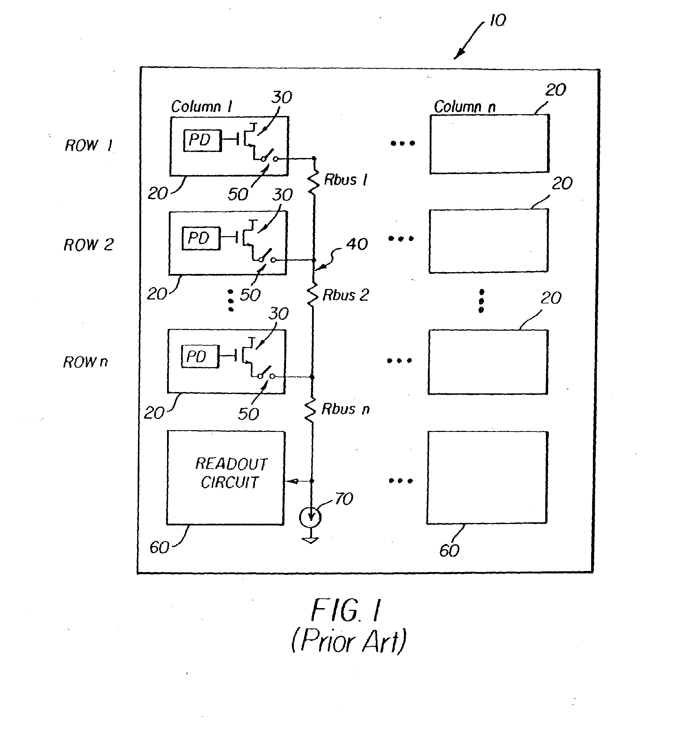

Referring to Fig. 1, many CMOS imagers 10 utilize an array of "active pixels" 20, in which each pixel 20 in the array contains a source follower amplifier 30. Typically each column of the pixel array has a vertical column bus 40 that runs past all the horizontal pixel rows. Each pixel 20 in this column contains a multiplexer switch 50 that connects the pixel source follower output amplifier 30 to the column bus 40. The column bus 40 connects to a readout circuit 60, such as a sample and hold circuit, at the bottom of the pixel array. It is instructive to note that, although only one column of pixels 20 having an associated readout circuit 60 is shown in detail, there are a plurality of such pixels 20 and corresponding readout circuits 60 as shown in an exemplary manner as the blocks 20 and 60 without the details therein.

Source follower amplifiers 30 require a bias current 70 to operate. Typically a bias current generator 70 is included in the readout circuit at the bottom of the pixel array. In this case, the pixel output signals are affected by the voltage drop of the bias current flowing through the resistance of the bus trace, depending on the relative distance from the sample and hold circuit. If the source follower output voltage of a pixel is V1, then the corresponding signal at the SAH is V1 - Vₑᵣᵣₒᵣ, where Vₑᵣᵣₒᵣ = (source follower bias current) * (resistance of bus trace between pixel and SAH). The Vₑᵣᵣₒᵣ term is minimum for the pixel closest to the SAH and maximum for the pixel farthest from the SAH. In addition to dependence on bus trace length, the Vₑᵣᵣₒᵣ term is also dependent on the pixel signal level due to the fact that non-ideal source follower bias current generator circuits produce an output current that has some dependence on the output signal of the source follower. In images generated from the pixel array, the Vₑᵣᵣₒᵣ term could cause vertical shading artifacts due to pixel position-dependent offset and color errors due to signal-dependent gain.

Although the currently known and utilized method and apparatus for passing the capture charge from the photodiode to the readout circuit is satisfactory, it includes drawbacks. One such drawback is the undesirable voltage drop described hereinabove.

Consequently, a need exists for a method and apparatus for passing the captured charge from the photodiode to the readout circuit which eliminates this voltage drop.

The present invention is directed to overcoming one or more of the problems set forth above. Briefly summarized, according to one aspect of the present invention, the invention resides in a CMOS image sensor comprising (a) an array of pixels; (b) a plurality of buses, and each bus is connected to a portion of the pixels, each pixel comprising: (a1) a photodiode for capturing incident light and converting the light to charge packets; (a2) a source follower amplifier that receives a signal from the photodiode and functions as voltage buffer to drive the photodiode signal across the bus; (c) a sample and hold circuit for receiving and storing the output voltage from the amplifier; (d) a current source electrically connected at an opposite end of the bus from the readout circuit to provide a bias current for the source follower amplifier so that there is no current-resistance voltage drop error due to the bias current and bus resistance at the sample and hold circuit.

These and other aspects, objects, features and advantages of the present invention will be more clearly understood and appreciated from a review of the following detailed description of the preferred embodiments and appended claims, and by reference to the accompanying drawings.

The present invention has the following advantage of eliminating undesirable IR voltage drop by having the bias current generator electrically connected at the opposite end of the bus from the readout circuit. It is a further advantage to eliminate current source errors caused by the aforementioned voltage drop error.
Fig. 1 is a schematic drawing of a prior art image CMOS image sensor; and
Fig. 2 is a schematic drawing of a CMOS image sensor of the present invention.

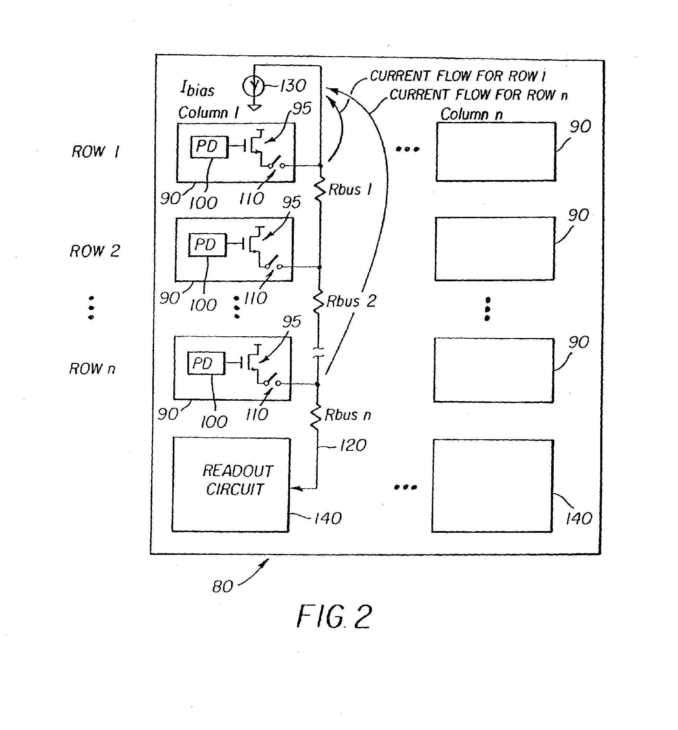

Referring to Fig. 2, there is shown the image sensor 80 of the present invention having a two dimensional array of active pixels 90. It is instructive to note that, although a two dimensional array is illustrated for a preferred embodiment, the present invention could also be applied to a linear array. The pixels 90 include a photodiode 100 for converting the incident light to a charge and a source follower amplifier 95 for buffering the resulting signal voltage. Each pixel includes a mechanism 110, preferably a multiplexer, for passing the resulting signal voltage to a bus 120. A current source 130 functions to provide a bias current I_{bias} for the source follower amplifiers 95. A readout circuit 140, such as a sample and hold circuit, functions to receive the signal form the selected pixel in the column and consequently passing it from the image sensor for processing.

It is instructive to note that, although only one column of pixels 90 having an associated readout circuit 140 is shown in detail, there are a plurality of such pixels 90 and corresponding readout circuits 140 as shown in an exemplary manner as the blocks 90 and 140 without the details therein.

The above described image sensor operates by having the photodiode 100 convert the incident light to a charge. The charge develops a voltage signal which is buffered by the source follower amplifier 95. According to the selected pixel 90, the multiplexer 110 of the selected pixel is enabled for passing the signal to the bus 120 which is consequently detected by the readout circuit 140. The current source functions to provide bias current I_{bias} for the selected source follower amplifier. As may be readily seen from the above, this provides the advantage of no current flow between the selected source follower amplifier and the readout circuit. Therefore, there is no IR voltage drop error between the selected source follower output and readout circuit input. For example, in row 1, the bias current does not flow through the bus resistance so there is no voltage drop, as illustrated by one of the arrows. For row n, the bias current flows between the selected source follower to the current source (as illustrated by the other arrow), but there is no current flow between this selected source follower output and the readout circuit input. Therefore, there is no voltage drop error at the readout circuit input.

## Claims

1. A CMOS image sensor comprising:
(a) an array of pixels;
(b) a plurality of buses, and each bus is connected to a portion of the pixels, each pixel comprising:
(a1) a photodiode for capturing incident light and converting the light to charge packets;
(a2) a source follower amplifier that receives a signal from the photodiode and functions as voltage buffer to drive the photodiode signal across the bus;
(c) a readout circuit for receiving and storing the output voltage from the amplifier; and
(d) a current source electrically connected at an opposite end of the bus from the readout circuit to provide a bias current for the source follower amplifier so that there is no current-resistance voltage drop error due to the bias current and bus resistance at the sample and hold circuit.

2. The CMOS sensor as in claim 1, wherein the array is an n x 1 array, and all of the pixels are connected to one or more buses.

3. A digital camera comprising:
(a) a CMOS image sensor comprising:
(al ) an array of pixels;
(a2) a plurality of buses, and each bus is connected to a portion of the pixels, each pixel comprising:
(ai) a photodiode for capturing incident light and converting the light to charge packets;
(aii) a source follower amplifier that receives a signal from the photodiode and functions as voltage buffer to drive the photodiode signal across the bus;
(b) a sample and hold circuit for receiving and storing the output voltage from the amplifier; and
(c) a current source electrically connected at an opposite end of the bus from the readout circuit to provide a bias current for the source follower amplifier so that there is no current-resistance voltage drop error due to the bias current and bus resistance at the sample and hold circuit.
